# EUROPEAN PATENT APPLICATION

(11) **EP 4 108 372 A1**
(43) Date of publication of application: **28.12.2022**
(21) Application number: 21758004.2
(22) Date of filing: 04.03.2021
(51) Int. Cl.: B23K 11/24

(54) **JOINING DEVICE AND METHOD FOR PRODUCING JOINED MEMBER**

(30) Priority: 21.02.2020 JP 2020028625
(71) Applicant: Origin Company, Limited, Saitama-shi Saitama 338-0823 (JP)
(72) Inventor: HAYASHI, Toshihiko, Saitama-shi, Saitama 338-0823 (JP); KADOYA, Yasuo, Saitama-shi, Saitama 338-0823 (JP); MIZUTANI, Shinya, Saitama-shi, Saitama 338-0823 (JP); SHIMIZU, Hisashi, Saitama-shi Saitama 338-0823 (JP)
(74) Representative: Wallin, Nicholas James
(86) International application number: PCT/JP2021/008552
(87) International publication number: WO 2021/167108

(57) **Abstract**

A joining device comprising: an electrode for transmitting current to an object to be joined; a current supply unit which, when voltage is applied thereto, generates a current to be supplied to the to-be-joined object; a current measuring unit which makes a measurement of the current to be supplied to the to-be-joined object; and a first control unit which, on the basis of current values measured previously by the current measuring unit, corrects the voltage to be applied to the current supply unit such that the current value measured by the current measuring unit becomes equal to a target current value. A joined member production method comprising supplying, to an object to be joined, a current generated through application of voltage to a current supply unit, measuring the current supplied to the to-be-joined object, and correcting the voltage to be applied to the current supply unit on the basis of a ratio between the current value thus measured and a desirable current value.

## Description

### TECHNICAL FIELD

The present disclosure relates to a joining device and a method for manufacturing a joined object and, in particular, to a joining device and a method for manufacturing a joined object capable of supplying a current at a target value to an object to be joined even when a state is changed.

### BACKGROUND ART

For example, as a device that fits and joins a shaft-shaped object to an internal space of a ring in a ring-shaped object, the following device is available. The device includes: a capacitor that stores electrical energy; a switching circuit that discharges electrical energy stored in the capacitor; a welding transformer that has primary winding connected to the switching circuit; and a pair of electrodes connected to secondary winding of the welding transformer. Then, in a state of applying a pressure to the objects to be joined (for example, the ring-shaped object and the shaft-shaped object) held between the pair of the electrodes, the switching circuit discharges the electrical energy, which is stored in the capacitor, in a short time, a relatively large amount of a pulse welding current is applied to the object to be joined, and portions to be joined are softened by Joule heat to join the objects to be joined (for example, Japanese Patent Application Publication No. 2005-342782).

### SUMMARY OF THE INVENTION

### PROBLEM TO BE SOLVED BY THE INVENTION

In the joining device as described above, even in the case where the same current value as the last time is set as the target value of the current to be supplied to the objects to be joined at the time of joining the objects to be joined, the target current value may not be supplied to the objects to be joined due to a change in a state of the joining device.

The present disclosure relates to, in view of the above-described problem, a provision of a joining device and a method for manufacturing a joined object that are capable of supplying a current at a target value to the object to be joined even when a state is changed.

### MEANS FOR SOLVING THE PROBLEM

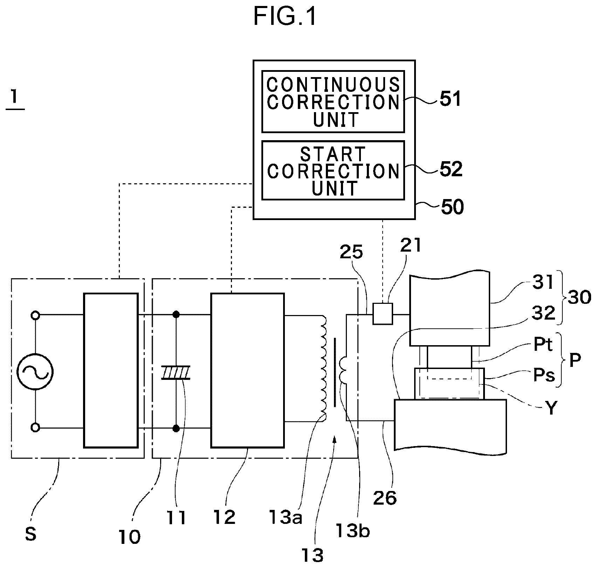

A joining device according to a first aspect of the present disclosure includes, as shown in FIG. 1, for example, an electrode 30 to contact an object P to be joined, the electrode 30 being configured to transmit a current to the object P to be joined; a current supply section 10 configured to supply the current that flows through the object P to be joined via the electrode 30, the current supply section 10 being configured to generate the current that is supplied to the object P to be joined due to a voltage being applied thereto; a current measurement section 21 configured to measure the current that is supplied to the object P to be joined; and a first control unit 51 configured to correct the voltage that is applied to the current supply section 10 based on a current value measured before a last time by the current measurement section 21 such that the current value measured by the current measurement section 21 becomes a target current value.

With such a configuration, in the case where the measured current value fluctuates due to a certain factor, the current at the target current value can be supplied to the object to be joined by correcting the applied voltage.

As for a joining device according to a second aspect of the present disclosure, as shown in FIG. 1, for example, in the joining device 1 according to the first aspect, the first control unit 51 is configured to correct the voltage that is applied to the current supply section 10 by multiplying a voltage, which was applied at a time when the current was supplied for a predetermined number of times, by a numerical value obtained by calculating a ratio between a predetermined current value and the target current value, the predetermined current value being between a highest value and a lowest value of the current values most recently measured for the predetermined number of times by the current measurement section 21.

With such a configuration, in the case where the predetermined number of times is set to one, the current value supplied to the object to be joined can be brought close to the target current value each time. In the case where the predetermined number of times is set to plural times, it is possible to mitigate an effect of a sudden disturbance. Note that in the case where the predetermined number of times is set to one, the highest value and the lowest value of the current value are the same value, and this value is set as the predetermined current value.

As for a joining device according to a third aspect of the present disclosure, as shown in FIG. 1, for example, in the joining device 1 according to the first or second aspect, the joining device 1 includes a second control unit 52 configured to correct the voltage that is applied to the current supply section 10 by multiplying a voltage, which was applied at a time of supplying the current in a reference state of the joining device 1, by a numerical value, when operation of the joining device 1 is resumed after a temporary stop, the numerical value being obtained by calculating a ratio between a current value, which is measured by the current measurement section 21 at a time of supplying the current to a correction object Y instead of the object P to be joined via the electrode 30 , and a reference current value, which is a current supplied to the correction object Y via the electrode 30 in the reference state.

With such a configuration, it is possible to avoid abnormal supply of the current that is possibly generated in conjunction with the application of the voltage, which is applied immediately before the stop of the operation, to the current supply section when the operation is resumed after the stop thereof.

A joining device according to a fourth aspect of the present disclosure is, as shown in FIG. 1, for example, a joining device for joining an object to be joined, and the joining device 1 includes: an electrode 30 to contact the object P to be joined, the electrode 30 being configured to transmit a current to the object P to be joined; a current supply section 10 configured to supply the current that flows through the object P to be joined via the electrode 30, the current supply section 10 being configured to generate the current that is supplied to the object P to be joined due to a voltage being applied thereto; a current measurement section 21 configured to measure the current that is supplied to the object P to be joined; and a control unit 50 configured to correct a voltage that is applied to the current supply section 10 by multiplying a voltage, which was applied at a time of supplying the current in a reference state of the joining device 1, by a numerical value, when operation of the joining device 1 is resumed after a temporary stop, the numerical value being obtained by calculating a ratio between a current value, which is measured by the current measurement section 21 at a time of supplying the current to a correction object Y instead of the object P to be joined via the electrode 30, and a reference current value, which is a current supplied to the correction object Y via the electrode 30 in the reference state.

With such a configuration, it is possible to avoid abnormal supply of the current that is possibly generated in conjunction with the application of the voltage, which is applied immediately before the stop of the operation, to the current supply section when the operation is resumed after the stop thereof.

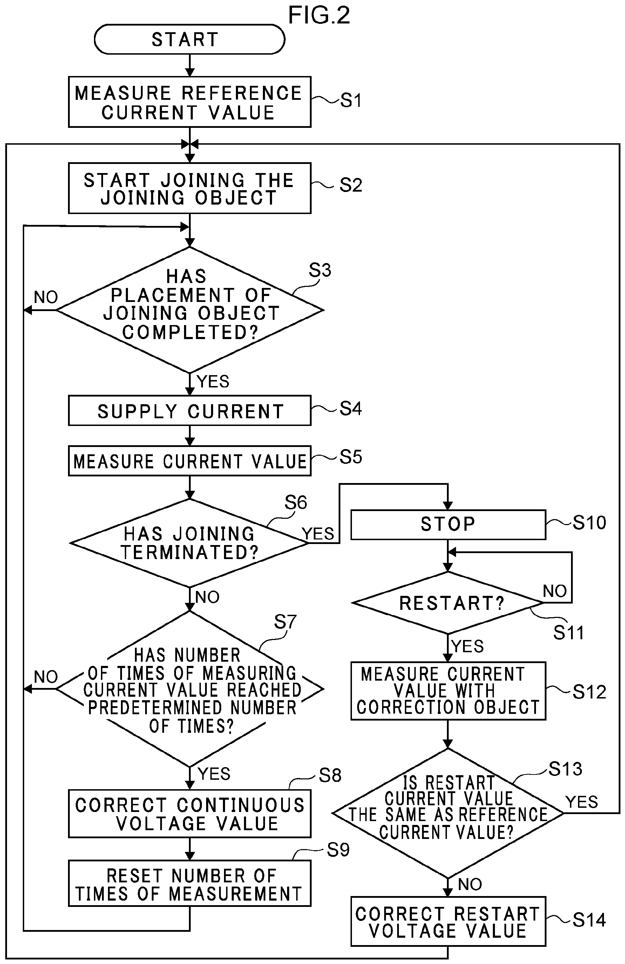

A method for manufacturing a joined object according to a fifth aspect of the present disclosure is, as shown in FIGs. 1 and 2, for example, a method for manufacturing a joined object obtained by joining an object P to be joined, and the method includes a current supply step (S4) of supplying a current, which is generated by applying a voltage to a current supply section 10, to the object P to be joined; a current measurement step (S5) of measuring the current supplied to the object P to be joined; and a voltage correction step (S8) of correcting the voltage that is applied to the current supply section 10 by multiplying a voltage, which was applied to the current supply section 10 at a time when the current was supplied for a predetermined number of times, by a numerical value obtained by calculating a ratio between a predetermined current value and a target current value, the predetermined current value being between a highest value and a lowest value of the current values most recently measured for the predetermined number of times in the current measurement step (S5).

With such a configuration, in the case where the measured current value fluctuates due to a certain factor, the current at the target current value can be supplied to the object to be joined by correcting the applied voltage. In the case where the predetermined number of times is set to one, the current value supplied to the object to be joined can be brought close to the target current value each time. In the case where the predetermined number of times is set to plural times, it is possible to mitigate the effect of the sudden disturbance.

A method for manufacturing a joined object according to a sixth aspect of the present disclosure is, as shown in FIGs. 1 and 2, for example, a method for manufacturing a joined object obtained by joining an object P to be joined, and the method includes a current supply step (S4) of supplying a current, which is generated by applying a voltage to a current supply section 10, to the object P to be joined; a current measurement step (S5) of measuring the current supplied to the object P to be joined; and a voltage correction step (S14) of correcting the voltage that is applied to the current supply section 10 by multiplying a voltage, which was applied at a time of supplying the current in a reference state, by a numerical value, when manufacturing of the joined object is resumed after a temporary stop, the numerical value being obtained by calculating a ratio between a current value, which is measured in the current measurement step (S12) at a time of supplying the current to a correction object Y instead of the object P to be joined, and a reference current value, which is a current supplied to the correction object Y in the reference state.

With such a configuration, it is possible to avoid abnormal supply of the current that is possibly generated in conjunction with the application of the voltage, which is applied immediately before the stop of manufacturing, to the current supply section when manufacturing is resumed after the stop of manufacturing.

### ADVANTAGE OF THE INVENTION

According to the present disclosure, the current at the target current value can be supplied to the object to be joined by correcting the voltage that is applied to the current supply section.

### BRIEF DESCRIPTION OF DRAWINGS

FIG. 1 is a schematic configuration view of a joining device according to an embodiment.
FIG. 2 is a flowchart for explaining control for maintaining a current supplied from a current supply section to a target current value.
FIG. 3 is a graph, illustrating relationship between the number of times of operation or time and a current value, a voltage, and a temperature during operation of the joining device according to the embodiment.

### DESCRIPTION OF EMBODIMENTS

This application is based on the Patent Application No. 2020-28625 filed on February 21, 2020 in Japan, the contents of which are hereby incorporated in its entirety by reference into the present application, as part thereof.

The present invention will become more fully understood from the detailed description given hereinbelow. Further range of application of the present invention will become clearer from the detailed description given hereinbelow. However, the detailed description and the specific embodiment are illustrated of desired embodiments of the present invention and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Description will hereinafter be made of each embodiment with reference to the drawings. The same or corresponding members are denoted with the same reference numerals in all the drawings, and their descriptions are not repeated.

First, with reference to FIG. 1, a description will be made on a joining device 1 according to an embodiment. FIG. 1 is a schematic configuration view of the joining device 1. The joining device 1 is a device for joining a joining object P (an object P to be joined), which is typically constructed of two metal objects Pt, Ps, by causing a current to flow through the joining object P while applying a pressure to the joining object P. The joining device 1 includes: an electrode 30 that sandwiches the joining object P; a current supply section 10 that acquires electric power from a power supply S and supplies the current to the electrode 30; an ammeter 21; and a control unit 50. The power supply S is typically constructed of a rectifier/smoothing circuit, which receives and converts commercial AC power into DC power, a combination of an AC generator and the rectifier/smoothing circuit, a DC generator, or the like. Although the power supply S is not included as a component of the joining device 1 in this embodiment, components of the power supply S may partially (for example, a rectifier/smoothing circuit portion) or entirely be included as the components of the joining device 1.

The current supply section 10 includes a capacitor 11, a switching circuit 12, and a transformer 13. The capacitor 11 stores electric charges so as to be able to supply, to the electrode 30, a relatively high current that is required to join the joining object P. It may be configured that the plural capacitors 11 are disposed in parallel. Capacity (total capacity) of the capacitor(s) 11 is preferably determined from joining capability requested for the joining object P. The switching circuit 12 is OFF when the electric charges are stored in the capacitor 11, and is ON when the capacitor 11 is discharged (when the electric charges stored in the capacitor 11 are supplied to the electrode 30). In this way, the switching circuit 12 controls the supply of the current from the current supply section 10. The switching circuit 12 typically includes a thyristor and is configured that ON-OFF of the switching circuit 12 can be controlled by adjusting presence or absence of input of a gate signal. The transformer 13 includes primary winding 13a and secondary winding 13b, and is configured to increase an amount of the current flowing through the secondary winding 13b to be larger than an amount of the current flowing through the primary winding 13a by reducing the number of winding of the secondary winding 13b to be smaller than the number of winding of the primary winding 13a. The current supply section 10 is electrically connected to the power supply S, and is also electrically connected to the electrode 30 via electrical wire 25, 26. The current supply section 10 is configured to be able to control a current value flowing through the electrode 30 by adjusting a voltage applied from the power supply S.

The ammeter 21 measures the current value of the current that is supplied from the current supply section 10 to the electrode 30 (and thus to the joining object P sandwiched by the electrode 30), and corresponds to the current measurement section. The ammeter 21 is installed in the wire 25 that connects the current supply section 10 and the electrode 30.

The electrode 30 contacts the joining object P and thereby transfers the current to the joining object P. As described above, the electrode 30 is connected to the secondary winding 13b of the transformer 13 via the wire 25, 26. The electrode 30 has an upper electrode 31 and a lower electrode 32 and is configured that the secondary winding 13b of the transformer 13 and the electrode 30 are conducted via the wire 25, 26 when the joining object P is held between the upper electrode 31 and the lower electrode 32. In addition, the electrode 30 is configured to be able to apply the pressure by a pressing device (not illustrated) in a direction in which the upper electrode 31 and the lower electrode 32 approach each other.

In this embodiment, the joining object P, which is sandwiched by the electrode 30, includes: a fitting object Pt, which is formed in a columnar shape; and an annular object Ps, which is formed in a ring shape. At a center of a thick disc shape of the annular object Ps, a columnar hollow portion (an internal space), an outer diameter of which is one size smaller than an outer diameter of the fitting object Pt, is formed. The fitting object Pt and the annular object Ps are typically formed of metal, such as carbon steel, alloy steel, or cast iron. The fitting object Pt and the annular object Ps may be formed of the same material or may be formed of different materials. In the joining object P, the fitting object Pt and the annular object Ps are joined by a Ring Mash (registered trademark) joining method (hereinafter simply referred to as "Ring Mash joining"). Ring Mash joining is a method for joining in solid-phase an outer surface of the fitting object Pt completely or almost uniformly to an inner surface of the annular object Ps for an entire circumference by fitting the fitting object Pt, a fitting diameter of which is one size larger than a space diameter, into the internal space of the annular object Ps by applying a welding current while pressurizing the fitting object Pt. In this solid-phase joining, the objects to be joined are brought into close contact with each other and are then heated to a lower temperature than a melting point, and the objects to be joined are thereby joined without being melted.

The control unit 50 controls operation of the joining device 1. The control unit 50 is connected to the current supply section 10 in a manner capable of exchanging a control signal in a wired or wireless manner, and controls ON-OFF of the switching circuit 12. In this way, the control unit 50 is configured to enable control of presence or absence of supply of the current from the current supply section 10. In addition, the control unit 50 is connected to the power supply S in the manner capable of exchanging the control signal in the wired or wireless manner, and is configured to be able to adjust the voltage that is applied to the current supply section 10 by the power supply S. Furthermore, the control unit 50 is connected to the ammeter 21 in the manner capable of exchanging the control signal in the wired or wireless manner, and is configured to be able to receive the current value that is measured by the ammeter 21 as a signal.

The control unit 50 stores a target current value and a reference current value. The target current value is a current value of a magnitude suited to be supplied to the electrode 30 in order to appropriately join the joining object P. The reference current value is a current value of the current that is supplied from the current supply section 10 when the electrode 30 sandwiches a correction object Y and a predetermined voltage is applied to the current supply section 10 in a reference state of the joining device 1. Here, the reference state is a state where a temperature of the joining device 1 is the same as a temperature of surrounding environment (ordinary temperature) where the joining device 1 is installed, and is typically a stopped state for a considerable period of time. In the case the temperature of the joining device 1 in the reference state fluctuates according to seasons and thus affects the reference current value, the reference current value may be changed by season, or the current value in the reference state in an intermediate season may be set as the reference current value. The correction object Y is an object that substitutes for the joining object P when the current is supplied to the electrode 30 on a trial basis in order to ascertain the state of the joining device 1, and a metal block is typically used therefor.

The control unit 50 has a continuous correction unit 51 and a start correction unit 52, each of which corrects the voltage applied to the current supply section 10 by the power supply S on the basis of the current value received from the ammeter 21. The continuous correction unit 51 corrects a value of the voltage, which is applied to the current supply section 10, on the basis of a ratio between a predetermined current value among the current values that are most recently measured for the predetermined number of times by the ammeter 21 during the operation of the joining device 1 and the target current value, and corresponds to the first control unit. The predetermined current value is the current value between the highest value and the lowest value of the current values measured for the predetermined number of times. In this embodiment, the predetermined current value is an average of the current values measured for the predetermined number of times. In addition, "most recently" described herein means immediately before a time when the correction is made. The predetermined number of times will be described below. The start correction unit 52 corrects the value of the voltage, which is applied to the current supply section 10, on the basis of a ratio between the current value at the time of applying the predetermined voltage (typically, the voltage at the time of measuring the reference current value) to the current supply section 10 to supply the current to the correction object Y sandwiched by the electrode 30 and the reference current value, when the operation of the joining device 1 is resumed after being stopped once. The start correction unit 52 corresponds to the second control unit. In the illustrated example, the continuous correction unit 51 and the start correction unit 52, which are provided in the control unit 50, are illustrated as different components from a functional perspective. However, the continuous correction unit 51 and the start correction unit 52 are typically constructed harmoniously. That is, typically, the control unit 50 as a whole is configured to appropriately control each of the above-described sections and exert both of the function of the continuous correction unit 51 and the function of the start correction unit 52.

Next, with continuous reference to FIG. 1, a description will be made on a method for manufacturing a joined object. The joined object is an object that is obtained after the joining object P is joined. The method for manufacturing the joined object described below is typically executed by using the joining device 1 that has been described so far, but may be executed by using a different device from the joining device 1. The following description on the method for manufacturing the joined object by using the joining device 1 serves as a description on operation of the joining device 1. Once manufacturing of the joined object is started, the control unit 50 causes the voltage to be applied to the current supply section 10 from the power supply S. When the voltage is applied to the current supply section 10, the electrical energy is stored in the capacitor 11. The joining object P is placed on the electrode 30 by the time the electrical energy is stored in the capacitor 11. The joining object P is typically placed on the electrode 30 by placing the annular object Ps on the lower electrode 32, placing the fitting object Pt on the annular object Ps in a manner to fit to the internal space of the annular object Ps, and placing the upper electrode 31 on the fitting object Pt. It goes without saying that the joining object P may be placed on the electrode 30 before the voltage is applied from the power supply S to the current supply section 10. Once the joining object P is placed on the electrode 30 and the electrical energy is stored in the capacitor 11, the control unit 50 causes the pressing device (not illustrated) to apply the pressure to the joining object P, which is held between the upper electrode 31 and the lower electrode 32. Then, while applying this pressure, the control unit 50 actuates the switching circuit 12 to release the electrical energy stored in the capacitor 11 from the current supply section 10 via the transformer 13 in the short time. In this way, the relatively large amount of a pulse current is supplied to the joining object P via the electrode 30. The relatively large amount of the pulse current flows through contact portions of the joining object P with the fitting object Pt and the annular object Ps while a pressing force is applied to the contact portions of the joining object P. Consequently, the contact portions are heated by Joule heat and softened. In this way, the joining object P is solid-phase joined (Ring Mash joined). The joined object is manufactured by such joining.

As described above, when a pair of the objects Pt, Ps has been joined to manufacture the single joined object, the joined object sandwiched by the electrodes is replaced with the next joining object P, and then the next joining object P is joined in the same manner as described above. In general, once the operation of the joining device 1 is started, continuous operation is performed to continuously manufacture the plural joined objects from a perspective of productivity improvement. Here, the operation of the joining device 1 means a state where the joining device 1 is operated in a manner to enable joining of the joining object P. The continuous operation typically means operation in a state where the plural joining objects P are joined at the shortest possible intervals or in a state where the plural joining objects P are joined under substantially the same condition as the previous time even when the intervals are not the shortest possible intervals. In the case where the above type of joining is performed continuously, the current value supplied from the current supply section 10 may gradually be reduced due to a certain factor even when the voltage applied from the power supply S to the current supply section 10 is the same. Examples of the certain factor are increased resistance in the joining device 1 that is associated with a gradual increase in the temperature of the joining device 1 due to electrical discharge and the increased resistance in the joining device 1 due to wear of the component of the joining device 1 or the like. Conventionally, in order to recover the reduced current value to the target current value when the current value that is supplied during the continuous operation is reduced, maintenance has been performed every time a certain number of joints are made. However, this is one of the factors that hinders the productivity improvement. Thus, the joining device 1 according to this embodiment executes the following control to maintain the target current value.

FIG. 2 is a flowchart for explaining control for maintaining the current supplied from the current supply section 10 to the target current value. When the configuration of the joining device 1 is described in the following description, FIG. 1 is appropriately referred. Prior to the control of the joining device 1, first, in a state (the reference state) where the joining device 1 is at ordinary temperature, the correction object Y is sandwiched by the electrode 30, the specific voltage (a reference voltage) is applied to the current supply section 10, and the current is supplied from the current supply section 10 to the correction object Y. Then, the current value at the time is measured (S1). The current value measured at this time will be referred to as the "reference current value." The reference voltage may be any voltage within a range where a change in the resistance in the joining device 1 can be detected with the current value when the resistance in the joining device 1 increases, and may be a voltage with which the target current value can be detected in the reference state, for example. After the reference current value is measured, joining of the joining object P is started (S2). In order to join the joining object P, as described above, the joining object P is first placed on the electrode 30. In order to prevent the supply of the current to the electrode 30 in a state where the joining object P is not placed on the electrode 30, the control unit 50 determines whether the joining object P has been placed on the electrode 30 (S3). If the joining object P has not been placed on the electrode 30, the processing returns to the step of determining whether the joining object P has been placed on the electrode 30 (S3).

If the joining object P has been placed on the electrode 30, the control unit 50 causes the predetermined voltage to be applied to the current supply section 10 to supply the current generated by the current supply section 10 to the electrode 30 and thus to the joining object P (a current supply step: S4). The predetermined voltage herein is a voltage at which the current supply section 10 can generate the current, with which the current at a value suited for joining of the joining object P can be supplied to the electrode 30, in the joining device 1 in the reference state in the case where the joining device 1 is in the reference state immediately after activation. When the current is supplied to the joining object P, the joining object P is joined (above-described Ring Mash joining is performed). When the current flows through the wire 25, 26 during joining of this joining object P, the ammeter 21 measures the current value supplied from the current supply section 10 to the electrode 30 (a current measurement step: S5). The current value measured by the ammeter 21 is sent to the control unit 50. When receiving the current value from the ammeter 21, the control unit 50 determines whether to terminate joining of the joining object P (S6). Examples of an occasion to terminate joining of the joining object P may be a case where a command to terminate joining is input from an input device (not illustrated) and a case where joining of the scheduled number of the joining objects P is completed.

In the step (S6) of determining whether to terminate joining of the joining object P, if joining is not terminated, it is determined whether the number of times of measuring the current value most recently has reached the predetermined number of times (S7). The predetermined number of times is the number of times of measuring the current value (corresponding to the number of the joined joining object P) in order to calculate the average value of the actual current that serves as a basis for correction of the target current value. The predetermined number of times is preferably small from a perspective of reducing divergence of the measured current value from the target current value, but is preferably large from a perspective of mitigating an effect of a sudden disturbance. The predetermined number of times is preferably from 3 to 10 times and more preferably about 5 times. An example of the disturbance may be that an abnormal current value is measured when the joining object P is defective. If the number of times of measuring the current value (corresponding to the number of the joining object P that has been joined) has not reached the predetermined number of times, the processing returns to the step of determining whether the joining object P has been placed on the electrode 30 (S3). On the other hand, if the number of times of measuring the current value has reached the predetermined number of times, the voltage applied to the current supply section 10 is corrected (S8: a voltage correction step). The correction herein is correction at the time when the operation of the joining device 1 continues. Thus, such correction will be referred to as "continuous voltage correction" for convenience. The continuous voltage correction is typically made as follows. The control unit 50 (the continuous correction unit 51) first calculates the average value of the last current values received from the ammeter 21 for the predetermined number of times (an average current value). Next, the voltage value that is applied to the current supply section 10 at the time of measuring the current value from which this average current value is calculated is multiplied by a ratio of the target current value to the average current value (the target current value/the average current value). The thus-calculated voltage value is the voltage value that has been corrected in the continuous voltage correction step (S8). Such correction is based on a fact that, in light of Ohm's law, the voltage has to be changed in proportion to the resistance in order to keep the current value constant when the resistance changes. For convenience of the description below, the ratio of the target current value to the average current value (the target current value/the average current value) may also be referred to as a "continuous current ratio". After the continuous voltage value is corrected, the count of the predetermined number of times for determining whether the number of times of measuring the current value has reached the predetermined number of times is reset (S9). The continuous voltage correction step (S8) and the step of resetting the count of the predetermined number of times (S9) may be executed in reverse order or may be executed simultaneously.

After the count of the predetermined number of times is reset (S9), the processing returns to the step of determining whether the joining object P has been placed on the electrode 30 (S3). Thereafter, the processing continues to current supply step (S4) and the current measurement step (S5) as described above. Here, since the voltage applied to the current supply section 10 has been corrected, the divergence of the current value that is measured in the current measurement step (S5) from the target current value is suppressed. Accordingly, the current at the target current value or a value close to the target current value is supplied to the joining object P, and appropriate Ring Mash joining is performed. In the continuous voltage correction step (S8), in the case where the average current value substantially matches the target current value (that is, the continuous current ratio is substantially 1), it appears that the voltage value applied to the current supply section 10 is not corrected. However, in this embodiment, the voltage value applied to the current supply section 10 should be treated as being corrected to substantially the same voltage value as the last voltage value applied to the current supply section 10.

In the step of determining whether to terminate joining of the joining object P (S6), if joining is terminated, the control unit 50 stops the joining device 1 (S10). Thereafter, the control unit 50 determines whether to restart the joining device 1 (S11). Whether to restart the joining device 1 is typically determined by determining whether a command to restart the joining device 1 has been input from the input device (not illustrated). Then, if the joining device 1 is not restarted, the processing returns to the step (S11) of determining whether to restart the joining device 1. On the other hand, if the joining device 1 is restarted, the correction object Y is sandwiched by the electrode 30, then the reference voltage is applied to the current supply section 10 to supply the current from the current supply section 10 to the correction object Y, and then the current value (this current value will be referred to as a "restart current value") at the time is measured (S12). This step (S12) is identical to the step (S1) except for a point that whether the joining device 1 is in the reference state is unknown. After the current value supplied to the correction object Y at the time of the restart is measured (S12), it is determined whether the restart current value measured in this step (S12) is the same as the reference current value (S13). If the restart current value is the same as the reference current value, the joining device 1 can be handled as in the reference state. Thus, the voltage is not changed from the voltage that is applied to the current supply section 10 in the step (S12), and the processing proceeds to the step (S2) of starting joining of the joining object P.

On the other hand, if the restart current value differs from the reference current value, the voltage applied to the current supply section 10 is corrected (S14: a voltage correction step). The correction herein is correction at the time when the operation of the stopped joining device 1 is restarted. Thus, such correction will be referred to as "restart voltage correction" for convenience. In the restart voltage correction, the control unit 50 (the start correction unit 52) typically multiplies the voltage value that is applied to the current supply section 10 in the reference state by a ratio of the target current value to a restart current value (the target current value/the restart current value). The thus-calculated voltage value is the voltage value that is corrected in the restart voltage correction step (S14). Such correction is also based on a fact that, in light of Ohm's law, the voltage is changed according to the change in the resistance in order to maintain the target current value. The following is a reason for correcting the restart voltage value. After the correction is made to increase the continuous voltage value in order to maintain the current value, which is possibly reduced with the increase in the resistance due to the continuous operation, at the target current value as described above, the operation of the joining device 1 is stopped. Then, the temperature of the joining device 1 decreases with the lapse of time. Due to this reduction in the temperature, the resistance of the joining device 1 may have decreased. In the case where the voltage immediately before the stop is applied to the joining device 1 with the decreased resistance, a larger amount of the current than the target current value is possibly supplied to the electrode 30. In this embodiment, when the operation of the joining device 1 is resumed, the current that is generated by the application of the voltage in the reference state to the correction object Y flows through the correction object Y, and such a current is measured. In this way, it is possible to ascertain the change in the resistance value or the like from those in the reference state, and the voltage value is corrected according to this change. As a result, it is possible to suppress an excess amount of the current from being supplied to the electrode 30. Thus, after replacing the correction object Y with the joining object P, the joining object P can appropriately be joined. After the restart voltage value is corrected in the restart voltage correction step (S14), the processing returns to the step of determining whether the joining object P has been placed on the electrode 30 (S3), and the above-described steps are repeated thereafter.

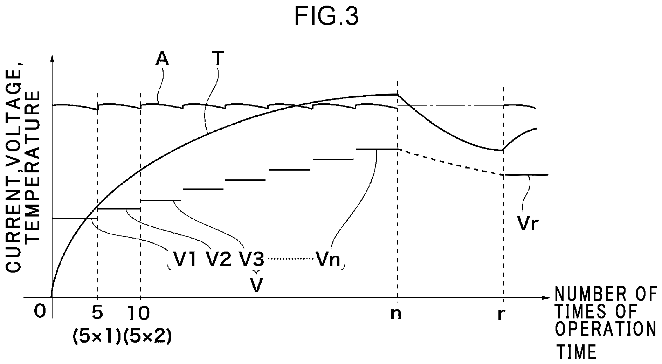

With additional reference to FIG. 3, description on the continuous voltage correction and the restart voltage correction will be supplemented. FIG. 3 is a graph illustrating a relationship between the number of times of operation of the joining device 1 (a horizontal axis) and the current value detected by the ammeter 21, the voltage applied to the current supply section 10, and the temperature of the joining device 1 (a vertical axis) during the operation of the joining device 1 according to this embodiment. The horizontal axis of the graph illustrated in FIG. 3 also represents an elapsed time. When the joining device 1 is operated continuously, the number of times of operation is typically proportional to the time. In the graph illustrated in FIG. 3, a line V represents the voltage applied to the current supply section 10, a line A represents the current value detected by the ammeter 21, and a line T represents the temperature of the joining device 1. First, looking at the temperature T of the joining device 1, the temperature T of the joining device 1, which is in the reference state with zero number of times of operation, increases as the number of times of operation increases since the start of the operation. The temperature T has a large increase range (a rate of an increase) at the beginning of the operation, and the increase range becomes smaller as the number of times of operation is increased. In this situation where the temperature T of the joining device 1 changes, the voltage V is increased in a staircase (step-like) manner such that the current value A detected by the ammeter 21 becomes constant. Here, a voltage V1 is a voltage at which the current supply section 10 can generate the current, with which the current at the value suited for joining of the joining object P can be supplied to the electrode 30, in the joining device 1 in the reference state in the case where the reference current value is measured (S1) and thereafter the first current supply step (S4) is executed. A voltage V2 is a voltage at which the continuous voltage correction is made after the number of times of operation of the joining device 1 (same as the number of times of joining the joining object P and the number of times of measuring the current value) reaches the predetermined number of times (five times in this embodiment). This voltage V2 is obtained by multiplying the voltage V1 by the continuous current ratio. Then, when the number of times of operation reaches five times (the predetermined number of times), the count of the predetermined number of times is reset (S9). When the number of times of operation from this point reaches five times (the predetermined number of times after resetting, the total number of times of operation is 10 since the activation), the voltage V2, which is applied at the time when the basis for calculating the continuous current ratio is determined, is multiplied by the continuous current ratio for the last predetermined number of times of operation (6 to 10 times of the total number of times of operation), so as to obtain a voltage V3, which has been subjected to the continuous voltage correction and is applied from the next number of times of operation. By sequentially making the continuous voltage correction just as described, the current value A, which would be possibly dropped to the right when the voltage V is maintained to be constant, can be maintained at the constant target current value.

Thereafter, in the case where the operation of the joining device 1 is stopped (S10) at the time when the number of times of operation reaches n times, the temperature T of the joining device 1 decreases with time. The operation is resumed at a time point at which time has elapsed since the stop of the operation and the number of times of operation indicates r times. At this time, the temperature of the joining device 1 has decreased from that at the time point of stopping the operation, and in the case where the resistance of the joining device 1 has decreased, it is considered that the current supplied to the electrode 30 will be higher than the target current value when a voltage Vn immediately before the stop is applied to the current supply section 10. Accordingly, in this embodiment, a voltage Vr that is obtained by the restart voltage correction (S14) is applied to the current supply section 10, so as to supply the current at the target current value to the electrode 30. After the operation is resumed, the temperature T of the joining device 1 increases again. Thus, the continuous voltage correction is made while the continuous operation is performed. Note that the voltage V and the current A between the numbers of times of operation n and r are provided as values for reference that could be obtained if the operation is restarted at this time point.

As it has been described so far, according to this embodiment, the voltage applied to the current supply section 10 is corrected on the basis of the current value that is measured before the last measurement by the ammeter 21 (the time when a condition that serves as the basis for the continuous voltage correction is met and is typically plural consecutive times including the last time, but may be the last single time) such that the current value measured by the ammeter 21 becomes the target current value. Accordingly, even in the case where the current value measured by the ammeter 21 fluctuates due to a certain factor, such as the increase in the resistance due to the temperature increase caused by the operation of the joining device 1 or aging of the joining device 1, the current at the target current value can continuously be supplied to the joining object P by the correction of the voltage applied to the current supply section 10 (the continuous voltage correction). In addition, when the operation of the joining device 1 is resumed after the temporary stop, the voltage, which is applied at the time of supplying the current in the reference state, is multiplied by the numerical value obtained by calculating the ratio between the current value, which is measured by the ammeter 21 at the time of supplying the current to the correction object Y instead of the joining object P via the electrode 30, and the reference current value, which is the current supplied to the correction object Y via the electrode 30 in the reference state of the joining device 1. In this way, the voltage applied to the current supply section 10 is corrected. As a result, it is possible to avoid abnormal supply of the current that is possibly generated in conjunction with the application of the voltage, which is applied immediately before the stop of the operation, to the current supply section 10 at the time of resuming the operation.

In the description that has been made so far, the control unit 50 makes both of the continuous voltage correction and the restart voltage correction. However, the control unit 50 may only make one thereof. For example, in the case where the control unit 50 makes the continuous voltage correction but does not make the restart voltage correction, in the flowchart illustrated in FIG. 2, the control may be terminated after the step of stopping the joining device 1 (S10), and thus the step (S11) to the step (S14) may be eliminated. On the other hand, in the case where the control unit 50 makes the restart voltage correction but does not make the continuous voltage correction, in the flowchart illustrated in FIG. 2, the processing may return to the step of determining whether the joining object P has been placed on the electrode 30 (S3) if joining is not terminated in the step of determining whether to terminate joining of the joining object P (S6), and thus the step (S7) to the step (S9) may be eliminated.

In the description that has been made so far, the predetermined current value that is contrasted to the target current value at the time of the continuous voltage correction is the average (the average current value) of the current values measured for the predetermined number of times. However, the predetermined current value may be an appropriate value between the highest value and the lowest value. For example, in the case where the lowest value (typically, the current value that was measured at the last time of the predetermined number of times) of the current values measured for the predetermined number of times is set as the predetermined current value, such a lowest value of the current can be regarded as the current value at the time when the temperature of the joining device 1 has increased. Accordingly, in the case where the current value does not match the target current value after the correction of the voltage, the current value tends to exceed the target current value. However, even in the case where the voltage is corrected to be diverged slightly from a proper value, such divergence is reflected to the current value in the next measurement. As a result, the current value is not significantly diverged from the target current value and is corrected in the second correction from the current time.

In the description that has been made so far, the joining device and the method for manufacturing the joined object according to the embodiments of the present disclosure have been described with reference to each figure as the example. However, the configurations, structures, numbers, arrangements, shapes, materials, and the like of each of the sections are not limited to the above specific example. The components that are appropriately and selectively adopted by the person skilled in the art are included in the scope of the present invention as long as the gist of the present invention is included.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A joining device, comprising:
an electrode to contact an object to be joined, the electrode being configured to transmit a current to the object to be joined;
a current supply section configured to supply the current that flows through the object to be joined via the electrode, the current supply section being configured to generate the current that is supplied to the object to be joined due to a voltage being applied thereto;
a current measurement section configured to measure the current that is supplied to the object to be joined; and
a first control unit configured to correct the voltage that is applied to the current supply section based on a current value measured before a last time by the current measurement section such that the current value measured by the current measurement section becomes a target current value,
wherein the first control unit is configured to correct the voltage that is applied to the current supply section by multiplying a voltage, which was applied at a time when the current was supplied for a predetermined number of times, by a numerical value obtained by calculating a ratio between a predetermined current value and the target current value, the predetermined current value being between a highest value and a lowest value of the current values most recently measured for the predetermined number of times by the current measurement section.

2. The joining device according to claim 1, further comprising:
a second control unit configured to correct the voltage that is applied to the current supply section by multiplying a voltage, which was applied at a time of supplying the current in a reference state of the joining device, by a numerical value, when operation of the joining device is resumed after a temporary stop, the numerical value being obtained by calculating a ratio between a current value, which is measured by the current measurement section at a time of supplying the current to a correction object instead of the object to be joined via the electrode, and a reference current value, which is a current supplied to the correction object via the electrode in the reference state.

3. A joining device, comprising:
an electrode to contact an object to be joined, the electrode being configured to transmit a current to the object to be joined;
a current supply section configured to supply the current that flows through the object to be joined via the electrode, the current supply section being configured to generate the current that is supplied to the object to be joined due to a voltage being applied thereto;
a current measurement section configured to measure the current that is supplied to the object to be joined;
a first control unit configured to correct the voltage that is applied to the current supply section based on a current value measured before a last time by the current measurement section such that the current value measured by the current measurement section becomes a target current value; and
a second control unit configured to correct the voltage that is applied to the current supply section by multiplying a voltage, which was applied at a time of supplying the current in a reference state of the joining device, by a numerical value, when operation of the joining device is resumed after a temporary stop, the numerical value being obtained by calculating a ratio between a current value, which is measured by the current measurement section at a time of supplying the current to a correction object instead of the object to be joined via the electrode, and a reference current value, which is a current supplied to the correction object via the electrode in the reference state.

4. A joining device for joining an object to be joined, comprising:
an electrode to contact the object to be joined, the electrode being configured to transmit a current to the object to be joined;
a current supply section configured to supply the current that flows through the object to be joined via the electrode, the current supply section being configured to generate the current that is supplied to the object to be joined due to a voltage being applied thereto;
a current measurement section configured to measure the current that is supplied to the object to be joined; and
a control unit configured to correct a voltage that is applied to the current supply section by multiplying a voltage, which was applied at a time of supplying the current in a reference state of the joining device, by a numerical value, when operation of the joining device is resumed after a temporary stop, the numerical value being obtained by calculating a ratio between a current value, which is measured by the current measurement section at a time of supplying the current to a correction object instead of the object to be joined via the electrode, and a reference current value, which is a current supplied to the correction object via the electrode in the reference state.

5. A method for manufacturing a joined object obtained by joining an object to be joined, the method comprising:
a current supply step of supplying a current, which is generated by applying a voltage to a current supply section, to the object to be joined;
a current measurement step of measuring the current supplied to the object to be joined; and
a voltage correction step of correcting the voltage that is applied to the current supply section by multiplying a voltage, which was applied to the current supply section at a time when the current was supplied for a predetermined number of times, by a numerical value obtained by calculating a ratio between a predetermined current value and a target current value, the predetermined current value being between a highest value and a lowest value of the current values most recently measured for the predetermined number of times in the current measurement step.

6. A method for manufacturing a joined object obtained by joining an object to be joined, the method comprising:
a current supply step of supplying a current, which is generated by applying a voltage to a current supply section, to the object to be joined;
a current measurement step of measuring the current supplied to the object to be joined; and
a voltage correction step of correcting the voltage that is applied to the current supply section by multiplying a voltage, which was applied at a time of supplying the current in a reference state, by a numerical value, when manufacturing of the joined object is resumed after a temporary stop, the numerical value being obtained by calculating a ratio between a current value, which is measured in the current measurement step at a time of supplying the current to a correction object instead of the object to be joined, and a reference current value, which is a current supplied to the correction object in the reference state.
